# EUROPÄISCHE PATENTANMELDUNG

(11) **EP 4 439 215 A2**
(43) Veröffentlichungstag der Anmeldung: **02.10.2024**
(21) Anmeldenummer: 24151069.2
(22) Anmeldetag: 10.01.2024
(51) Int. Cl.: G05B 23/02

(54) **VERFAHREN UND VORRICHTUNG DER PROZESSTECHNIK**

(30) Priorität: 29.03.2023 DE 102023107978
(71) Anmelder: Gemü Gebr. Müller Apparatebau GmbH & Co. Kommanditgesellschaft, 74653 Ingelfingen (DE)
(72) Erfinder: Höfs, Daniel, 74653 Künzelsau (DE)
(74) Vertreter: DREISS Patentanwälte PartG mbB

(57) **Zusammenfassung**

Es wird ein Verfahren bereitgestellt, welches umfasst: Ermitteln oder Bereitstellen (402), insbesondere mittels einer Bereitstellungseinheit (102), von Betriebsdaten (D), welche sich auf einen derzeitigen Zustand einer Komponente einer Industrieanlage beziehen; Ermitteln (404a-z), insbesondere mittels voneinander unterschiedlicher Bewertungsfunktionen (104a-z), einer Mehrzahl von Bewertungen (Pa, Pz), welche einen derzeitigen Zustand der Komponente charakterisieren, in Abhängigkeit von den Betriebsdaten (D); und Ermitteln (406), insbesondere mittels einer Konsensfunktion (106), eines Diagnoseergebnisses in Abhängigkeit von der Mehrzahl von Bewertungen (Pa, Pz).

## Beschreibung

Die Erfindung betrifft Fortschritte auf dem Gebiet der Diagnose in der Prozesstechnik, insbesondere der Diagnose in der Prozessventiltechnik.

Die Probleme des Stands der Technik werden durch Verfahren und Vorrichtungen gemäß den beigefügten unabhängigen Ansprüchen gelöst.

Ein Aspekt der Beschreibung betrifft den folgenden Gegenstand:
Ein Verfahren umfassend Ermitteln oder Bereitstellen, insbesondere mittels einer Bereitstellungseinheit, von Betriebsdaten, welche sich auf einen derzeitigen Zustand einer Komponente einer Industrieanlage beziehen; Ermitteln, insbesondere mittels voneinander unterschiedlicher Bewertungsfunktionen, einer Mehrzahl von Bewertungen, welche einen derzeitigen Zustand der Komponente charakterisieren, in Abhängigkeit von den Betriebsdaten; und Ermitteln, insbesondere mittels einer Konsensfunktion, eines Diagnoseergebnisses in Abhängigkeit von der Mehrzahl von Bewertungen.

Durch die Ermittlung der Mehrzahl von Bewertungen und das anschließende Ermitteln des Diagnoseergebnisses wird es ermöglicht, die Zwischenergebnisse im Sinne der Bewertungen miteinander maschinell zu vergleichen und anschließend ein optimiertes Diagnoseergebnis zu ermitteln. Gleichzeitig wird es durch den Einsatz mehrerer Bewertungsfunktionen möglich, das Auftreten fehlerhafter Diagnoseergebnisse im Sinne von Fehlalarmen zu reduzieren.

Ein vorteilhaftes Beispiel zeichnet sich dadurch aus, dass das wenigstens eine Diagnoseergebnis einen Ferndiagnoseindikator, welcher eine erweiterte Diagnose unter Zuhilfenahme einer entfernt von der Komponente angeordneten Vorrichtung indiziert, umfasst, wobei das Verfahren umfasst: Versenden, mittels wenigstens einer Kommunikationseinheit, von Ferndiagnosedaten in Richtung der entfernt von der Komponente angeordneten Vorrichtung, wenn der Ferndiagnoseindikator ermittelt wurde.

Folglich werden die Ferndiagnosedaten nur dann versandt, wenn der Ferndiagnoseindikator ermittelt wurde. Damit wird verhindert, dass sämtliche Industriekomponenten Daten in die Cloud senden. Die vorhandene Übertragungskapazität wird also effizient und bedarfsgerecht genutzt.

Ein vorteilhaftes Beispiel zeichnet sich dadurch aus, dass das Verfahren umfasst: Empfangen, mittels der wenigstens einen Kommunikationseinheit, einer Bewertung, welche den derzeitigen Zustand der Komponente charakterisiert, als Antwort auf den Versand der Ferndiagnosedaten.

Vorteilhaft wird also im Ferndiagnosefall ermöglicht, auf zentrale mit erhöhter Rechenleistung ausgestattete Services zuzugreifen und die Bewertung errechnen zu lassen.

Ein vorteilhaftes Beispiel zeichnet sich dadurch aus, dass das Verfahren umfasst: Bereitstellen, mittels wenigstens einer Benutzerschnittstelle, des Ferndiagnoseindikators; Ermitteln, mittels der wenigstens einen Benutzerschnittstelle, eines Freigabebefehls; und wobei das Versenden der Ferndiagnosedaten nur dann erfolgt, wenn der Freigabebefehl vorliegt.

Vorteilhaft wird somit ein Versand der Daten aktiv vom Wartungspersonal über eine manuelle Eingabe des Freigabebefehls freigegeben. Damit wird sichergestellt, dass die ermittelten Daten nur mit Zustimmung des Bedienpersonals versendet werden.

Ein vorteilhaftes Beispiel zeichnet sich dadurch aus, dass das wenigstens eine ermittelte Diagnoseergebnis eine aggregierte Bewertung, welche den derzeitigen Zustand der Komponente charakterisiert, umfasst, wobei das Verfahren umfasst: Bereitstellen, mittels der wenigstens einen Benutzerschnittstelle, der aggregierten Bewertung.

Vorteilhaft kann die aggregierte Bewertung dem Fabrikpersonal zur Verfügung gestellt werden.

Ein vorteilhaftes Beispiel zeichnet sich dadurch aus, dass wenigstens eine der Bewertungsfunktionen maschinentrainiert ist.

Vorteilhaft können damit komplex trainierte Bewertungsfunktionen verwendet werden und die Diagnose verbessern.

Ein vorteilhaftes Beispiel zeichnet sich dadurch aus, dass das Ermitteln, mittels wenigstens einer der trainierten Bewertungsfunktionen, einer der Bewertungen umfasst: Bereitstellen, mittels einer Input-Einheit, von Eingangsdaten für ein trainiertes tiefes neuronales Netz in Abhängigkeit von den Betriebsdaten oder umfassend die Betriebsdaten; Propagieren der Eingangsdaten durch das trainierte tiefe neuronale Netz, wobei die Eingangsdaten als ein Eingabeparameter in einem Eingabeabschnitt des trainierten tiefen neuronalen Netzes bereitgestellt werden, und wobei in einem Ausgabeabschnitt des trainierten tiefen neuronalen Netzes Vorhersagen ausgegeben werden, welche die wenigstens eine Bewertung repräsentieren.

Ein vorteilhaftes Beispiel zeichnet sich dadurch aus, dass die wenigstens eine Bewertungsfunktion eine Abbildungsfunktion, welche wenigstens einen mit dem Betrieb der Komponente assoziierten Parameter, insbesondere eine Zyklusanzahl, eine Stromkennlinie eines Antriebs, eine Nutzungsart, auf die jeweilige Bewertung abbildet, umfasst.

Damit können die maschinentrainierten Bewertungsfunktionen unterstützt werden.

Ein vorteilhaftes Beispiel zeichnet sich dadurch aus, dass die Ferndiagnosedaten wenigstens zu einem Teil die bei der Ermittlung der Mehrzahl von Bewertungen verwendeten Betriebsdaten umfassen.

Damit kann die Auslösung der Ferndiagnose auf der entfernt angeordneten Vorrichtung nachvollzogen werden.

Ein vorteilhaftes Beispiel zeichnet sich dadurch aus, dass das Verfahren umfasst: Ermitteln oder Bereitstellen, insbesondere mittels einer Bereitstellungseinheit, von weiteren Daten, welche sich auf den derzeitigen Zustand einer Komponente einer Industrieanlage beziehen, und welche sich von den verwendeten Betriebsdaten unterscheiden, insbesondere eine höhere Genauigkeit im Vergleich mit den verwendeten Betriebsdaten aufweisen; und wobei die Ferndiagnosedaten wenigstens zu einem Teil die weiteren Daten umfasst, welche nicht bei der Ermittlung der Mehrzahl von Bewertungen verwendet wurden.

Vorteilhaft können folglich zusätzliche Daten bereitgestellt werden, welche für die zentrale Berechnung verwendet werden. Insbesondere können so selektiv größere Datenmengen versendet werden, welche die Ursachensuche durch eine zentrale Recheneinheit mit größerer Rechenkapazität verbessert. Weitergehend kann die zentrale trainierte Funktion nachtrainiert werden. Auf längere Sicht wird somit auch der Datenfundus zum Trainieren der Komponenten-nahen Funktionen vergrößert und verbessert.

Ein vorteilhaftes Beispiel zeichnet sich dadurch aus, dass die Komponente der Industrieanlage ein Prozessventil ist, wobei zumindest ein Teil der Betriebsdaten oder der weiteren Daten während einer Zeitdauer umfassend wenigstens einen oder maximal einen Öffnungsvorgang des Prozessventils oder wenigstens einen oder maximal einen Schließvorgang des Prozessventils aufgenommen wurden.

Vorteilhaft werden so die Betriebsdaten bzw. weiteren Daten effizient für die Diagnose des Prozessventils ermittelt.

Ein weiterer Aspekt der Beschreibung betrifft den folgenden Gegenstand: Ein Verfahren umfassend: Empfangen, mittels einer Kommunikationseinheit von Ferndiagnosedaten, welche einen derzeitigen Zustand einer Komponente einer Industrieanlage charakterisieren; Ermitteln, mittels unterschiedlicher insbesondere maschinentrainierter Bewertungsfunktionen, einer Mehrzahl von Bewertungen, welche den derzeitigen Zustand der Komponente charakterisieren, in Abhängigkeit von den empfangenen Ferndiagnosedaten; Ermitteln, mittels einer Konsensfunktion, wenigstens einer aggregierten Bewertung, welche den derzeitigen Zustand der Komponente charakterisiert, in Abhängigkeit von der Mehrzahl von Bewertungen; und Versenden, mittels der Kommunikationseinheit der aggregierten Bewertung.

In der Zeichnung zeigen:
Figur 1 eine Vorrichtung zur Diagnose eines Prozessventils in einem schematischen Blockdiagramm;
Figuren 2 und 3 verschiedene Beispiele zur Ausprägung der Vorrichtung aus Figur 1;
Figur 4 ein Ablaufdiagramm zum Betreiben der Vorrichtung aus Figur 1;
Figur 5 ein schematisches Blockdiagramm, welches neben der Vorrichtung aus der Figur 1 eine entfernt angeordnete Vorrichtung zeigt;
Figuren 6 und 7 das Training und die Verwendung eines künstlichen neuronalen Netzes; und
Figur 8 ein Beispiel zur Ermittlung eines Ferndiagnoseindikators.

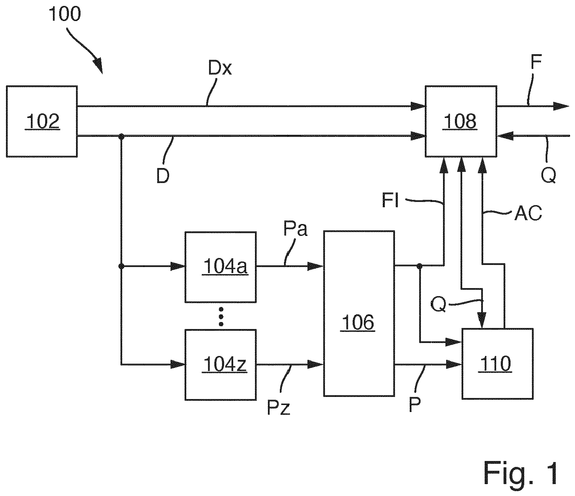

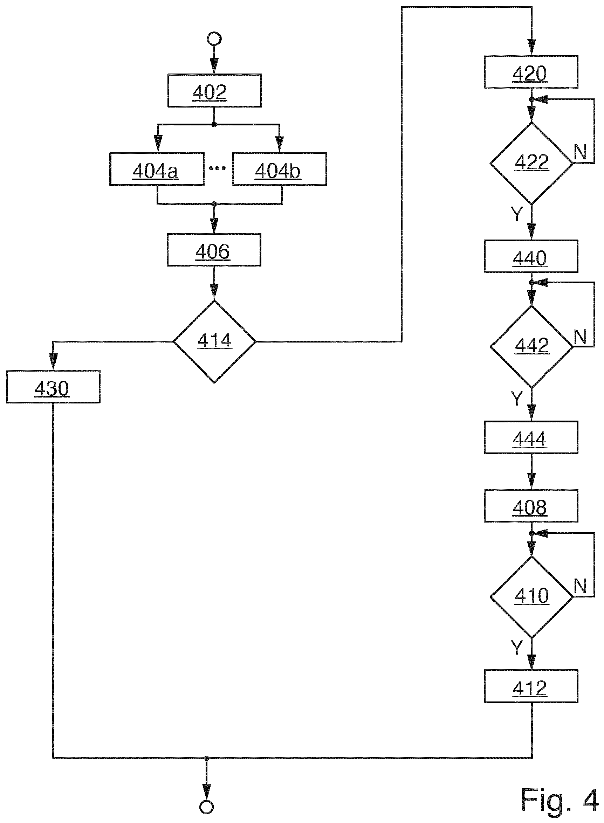

Figur 1 zeigt ein Blockdiagramm und Figur 4 zeigt ein Ablaufdiagramm. Im Folgenden werden Verfahrensschritte anhand der Figuren 1 und 4 unter Bezugnahme auf beide Figuren erläutert.

Mittels einer Bereitstellungseinheit 102 werden Betriebsdaten D, welche sich auf einen derzeitigen Zustand einer Komponente einer Industrieanlage beziehen, ermittelt oder bereitgestellt 402. Die Betriebsdaten umfassen beispielsweise im Falle einer Prozessarmatur eine Sensoraufnahme wie eine Audioaufnahme oder Vibrationsaufnahme oder daraus abgeleitete Date oder eine Anzahl von durchgeführten Schaltspielen oder ähnliches.

Mittels voneinander unterschiedlicher Bewertungsfunktionen 104a-z, wird eine Mehrzahl von Bewertungen Pa, Pz, welche einen derzeitigen Zustand der Komponente charakterisieren, in Abhängigkeit von den Betriebsdaten D ermittelt 404a-z.

Mittels einer Konsensfunktion 106 wird ein Diagnoseergebnis in Abhängigkeit von der Mehrzahl von Bewertungen Pa, Pz ermittelt 406.

Das Diagnoseergebnis umfasst beispielsweise eine Zusammenfassung der Bewertungen Pa, Pz. Sind die Bewertungen beispielsweise Werte zwischen oder bei 0 und 1, wobei 0 für einen Defekt und 1 für eine volle Funktionsfähigkeit der Komponente steht, so ist das Diagnoseergebnis ebenfalls ein Wert zwischen oder bei 0 und 1.

In einem Schritt 414 wird unterschieden, ob das ermittelte Diagnoseergebnis genau genug ist oder ob das ermittelte Diagnoseergebnis nicht sicher genug ist, um ein endgültiges Diagnoseergebnis bereitzustellen.

Die Betriebsdaten D unterteilen sich in einem Beispiel in unterschiedliche Betriebsdaten, die jeweils von wenigstens einer der unterschiedlichen Bewertungsfunktionen 104a-z verarbeitet werden.

Das wenigstens eine Diagnoseergebnis umfasst beispielsweise einen Ferndiagnoseindikator FI, welcher eine erweiterte Diagnose unter Zuhilfenahme einer entfernt von der Komponente angeordneten Vorrichtung 500 indiziert.

Mittels wenigstens einer Kommunikationseinheit 108 werden Ferndiagnosedaten F in Richtung der entfernt von der Komponente angeordneten Vorrichtung 500 versendet 408, wenn der Ferndiagnoseindikator FI ermittelt wurde.

Es wird eine aggregierte Genauigkeit der einzelnen Bewertungsfunktionen ermittelt. Hierzu werden mit den Bewertungen assoziierte Genauigkeitswerte ermittelt. Unterschreitet eine gewichtete aggregierte Genauigkeit der verwendeten Bewertungsfunktionen eine Mindestgenauigkeit, so wird der Ferndiagnoseindikator FI ermittelt.

Nach einem Versenden 440 des Ferndiagnoseindikators FI an die entfernt angeordnete Vorrichtung, wird eine Ferndiagnosedaten-Konfiguration empfangen 442. Die entfernt angeordnete Vorrichtung ermittelt die Ferndiagnosedaten-Konfiguration beispielsweise anhand von Problemklassen, welche über den Ferndiagnoseindikator FI bereits indiziert ist. Die Ferndiagnosedaten-Konfiguration kann auf der Seite der entfernt angeordneten Vorrichtung auch manuell durch einen Administrator festgelegt werden.

Die Ferndiagnosedaten-Konfiguration ermöglicht eine dynamische Anpassung der Probenwahl und damit eine verbesserte Anpassung der Eingabedaten für die zentrale Berechnung des Diagnoseergebnisses.

Es erfolgt eine Ermittlung 444 der zu versendenden Ferndiagnosedaten F in Abhängigkeit von der Ferndiagnosedaten-Konfiguration. Hierzu werden beispielsweise Zusatzdaten im Betrieb der Komponente generiert.

In einem Beispiel wird in Abhängigkeit von der empfangenen Ferndiagnose-Konfiguration im Schritt 444 ein erneutes Schalten, d.h. Öffnen oder Schließen, des Prozessventils abgewartet, um beispielsweise eine gegenüber der üblichen Erfassung veränderte Datenerfassung der Betriebsdaten D oder weiterer Daten durchzuführen. Beispielsweise werden ein Start- und Endzeitpunkt einer Audio- oder Vibrationsaufnahme oder eine Präzision der Aufnahme durch die empfangene Ferndiagnose-Konfiguration bestimmt.

In einem anderen Beispiel entfallen die Schritte 442 und 444.

Mittels der wenigstens einen Kommunikationseinheit 108, wird eine Bewertung Q, welche den derzeitigen Zustand der Komponente charakterisiert, als Antwort auf den Versand der Ferndiagnosedaten F empfangen 410.

Die empfangene Bewertung Q wird in einem Schritt 412 mittels der Benutzerschnittstelle 110 dem Wartungspersonal zur Kenntnis gebracht. Dann entscheidet das Wartungspersonal über den nächsten Wartungszyklus.

Mittels wenigstens einer Benutzerschnittstelle 110 wird das Ferndiagnoseindikator FI bereitgestellt 420.

Mittels der wenigstens einen Benutzerschnittstelle 110 wird ein Freigabebefehl AC ermittelt 422. Das Versenden 408 der Ferndiagnosedaten F erfolgt nur dann, wenn der Freigabebefehl AC vorliegt.

Das wenigstens eine ermittelte Diagnoseergebnis umfasst eine aggregierte Bewertung P, welche den derzeitigen Zustand der Komponente charakterisiert. Mittels der wenigstens einen Benutzerschnittstelle 110 wird die aggregierte Bewertung P bereitstellt 430.

Wenigstens eine der Bewertungsfunktionen 104a-z ist maschinentrainiert.

Die wenigstens eine Bewertungsfunktion 104a-z umfasst also eine maschinentrainierte oder nicht maschinentrainierte Abbildungsfunktion, welche wenigstens einen mit dem Betrieb der Komponente assoziierten Parameter, insbesondere eine Zyklusanzahl, eine Stromkennlinie eines Antriebs, eine Nutzungsart, auf die jeweilige Bewertung Pa, Pz abbildet.

Die Ferndiagnosedaten F umfassen wenigstens zu einem Teil die bei der Ermittlung der Mehrzahl von Bewertungen Pa-z verwendeten Betriebsdaten D.

Das Verfahren umfasst weitergehend: Ermitteln oder Bereitstellen, insbesondere mittels einer Bereitstellungseinheit 403, von weiteren Daten Dx, welche sich auf den derzeitigen Zustand einer Komponente einer Industrieanlage beziehen, und welche sich von den verwendeten Betriebsdaten unterscheiden, insbesondere eine höhere Genauigkeit im Vergleich mit den verwendeten Betriebsdaten D aufweisen; wobei die Ferndiagnosedaten F wenigstens zu einem Teil die weiteren Daten Dx umfasst, welche nicht bei der Ermittlung der Mehrzahl von Bewertungen Pa-z verwendet wurden.

Die Komponente der Industrieanlage ist beispielsweise ein Prozessventil 200. In einem anderen Beispiel können auch Pumpen, Sensoren oder andere Teile einer Prozessanlage die Komponente der Industrieanlage repräsentieren. Zumindest ein Teil der Betriebsdaten D oder der weiteren Daten Dx umfassen Daten, welche wenigstens einen oder maximal einen Öffnungsvorgang des Prozessventils 200 lang oder wenigstens einen oder maximal einen Schließvorgang des Prozessventils 200 lang aufgenommen wurden.

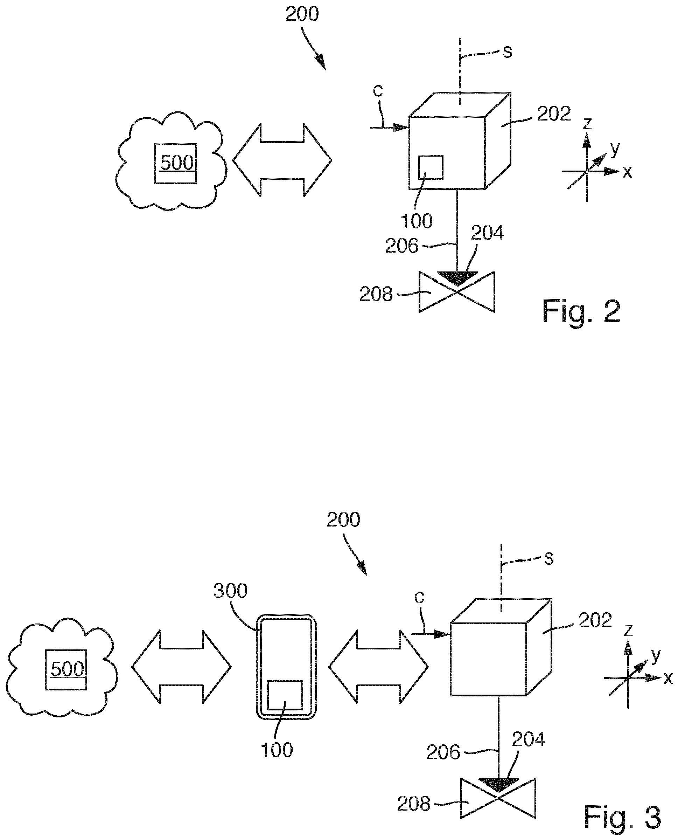

Figur 2 zeigt ein schematisches Blockdiagramm des Prozessventils 200, welches die Vorrichtung 100 aus der Figur 1 umfasst. Entlang der Stellachse S bewegt ein Ventilantrieb 202 über eine Antriebsstange 206 einen Absperrkörper 204 auf einen Ventilsitz eines Ventilkörpers 208 zu oder von diesem weg. Entsprechend schließt sich das Prozessventil 200 oder es öffnet sich. Der Ventilantrieb 202 wird über ein Ansteuersignal c betrieben und bewegt die Antriebsstange 206 entsprechend dem Ansteuersignal c. Die Vorrichtung 100 ist im gezeigten Beispiel Teil des Ventilantriebs 202 und in dessen Gehäuse untergebracht.

Die Betriebsdaten werden mittels Sensoren, die beispielsweise Teil der Vorrichtung 100 sind oder entfernt von der Vorrichtung 100 im Bereich des Prozessventils 200 angeordnet sind, ermittelt. Alternativ oder zusätzlich umfassen die Betriebsdaten interne Berechnungsergebnisse der Vorrichtung 100. Die Betriebsdaten können also Audioaufnahmen, Wegaufnahmen, Stromverläufe oder Ähnliches umfassen.

Figur 3 zeigt ein schematisches Blockdiagramm, wobei die Vorrichtung 100 außerhalb des Prozessventils 200 Teil eines Endgeräts 300 ist. Das Endgerät 300 ist beispielsweise ein Tablet-Computer oder ein Mobiltelefon. Das Endgerät 300 umfasst ein Mikrofon zur Aufnahme von Audiodaten als Teil der Betriebsdaten. Das Endgerät 300 empfängt in einer Ausführungsform zusätzlich weitere Daten als Teil der Betriebsdaten von einer nicht gezeigten Einheit, welche Teil des Prozessventils 200 ist.

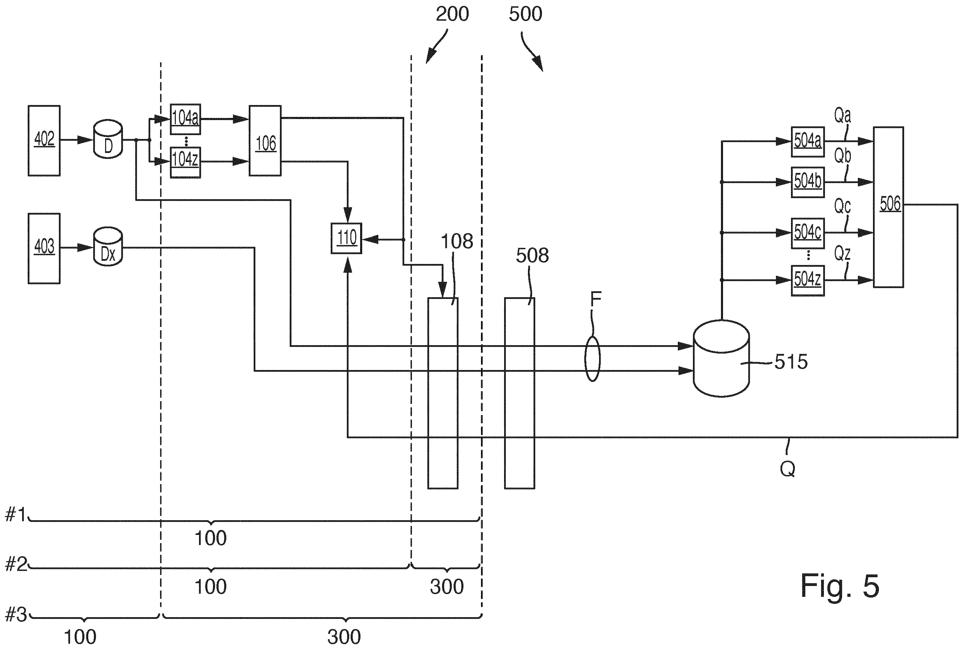

Figur 5 zeigt neben der Vorrichtung 100 die entfernt von der Vorrichtung 100 angeordnete Vorrichtung 500. Diese wird mit einem Verfahren betrieben, welches umfasst: Empfangen, mittels einer Kommunikationseinheit 508 von Ferndiagnosedaten F, welche einen derzeitigen Zustand einer Komponente einer Industrieanlage charakterisieren; Abspeichern, mittels einer Speichereinheit 510, der empfangenen Ferndiagnosedaten F.

Weitergehend umfasst das Verfahren: Ermitteln, mittels unterschiedlicher insbesondere maschinentrainierter Bewertungsfunktionen 504a-z, einer Mehrzahl von Bewertungen Qa-z, welche den derzeitigen Zustand der Komponente charakterisieren, in Abhängigkeit von den empfangenen Ferndiagnosedaten F; Ermitteln, mittels einer Konsensfunktion 506, wenigstens einer aggregierten Bewertung Q, welche den derzeitigen Zustand der Komponente charakterisiert, in Abhängigkeit von der Mehrzahl von Bewertungen Qa, Qz; und Versenden, mittels der Kommunikationseinheit 508 der aggregierten Bewertung Q in Richtung der Vorrichtung 100.

Die Unterschiedlichkeit der Bewertungsfunktionen ergibt sich durch wenigstens einen Unterschied aus den folgenden Kategorien: Eingangsdaten, Netzstruktur.

Gemäß einem ersten Beispiel #1 sind die Komponenten im Bereich bzw. in der Nähe des Prozessventils 200 auf einer Einheit 100 vereint, wie beispielsweise in den Figuren 2 und 3 gezeigt.

Gemäß einem zweiten Beispiel #2 sind die Komponenten im Bereich bzw. in der Nähe des Prozessventils 200 so verteilt, dass das die Kommunikationseinheit 108 des Endgeräts 300 verwendet wird, um die seitens der Vorrichtung 100 generierten Daten D und Dx zu versenden, und um die Bewertung Q zu empfangen.

Gemäß einem dritten Beispiel #3 sind die Komponenten im Bereich bzw. in der Nähe des Prozessventils 200 so verteilt, dass das Endgerät 300 die Berechnungen mittels der Bewertungsfunktionen 104-az und der Konsensfunktion 106 vornimmt, und dass die Vorrichtung 100 die Datenaggregation vornimmt.

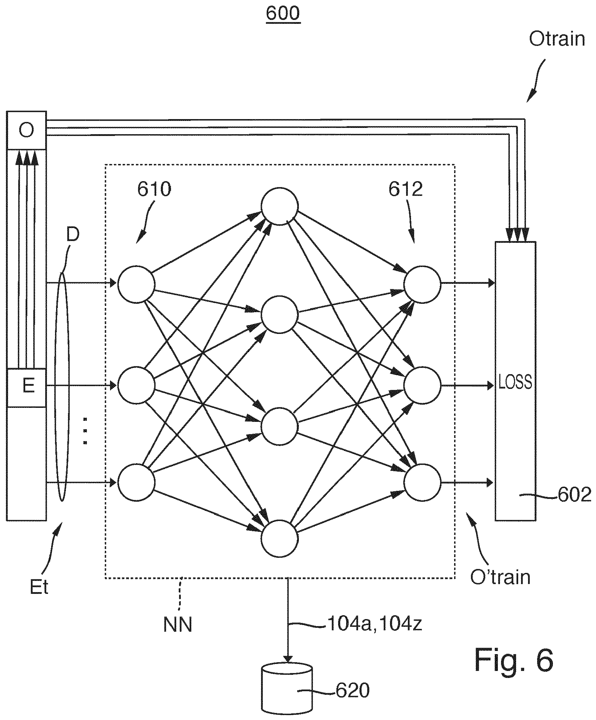

Eine Vorrichtung 600 für das Training einer der Funktionen 104a-z ist in Figur 6 dargestellt. Trainingsdaten Et werden in Form von Betriebsdaten bereitgestellt.

Die Anordnung umfasst das künstliche neuronale Netzwerk NN mit einer Eingangsschicht 610. Für einen Zeitschritt i wird ein Eingangstensor der Eingabe E an die Eingangsschicht übergeben. Zur Eingabe E wird die Ausgabe 0 in Form einer Klassifikation bzw. Bewertung, die beispielsweise eine Anomalie oder einen Normalbetrieb ohne Anomalie indiziert, dafür bestimmt oder ist vorbekannt. Aus der Ausgabe O wird im Zeitschritt i ein Tensor mit beobachteten Werte Otrain bestimmt, die den beobachteten Werten des Tensors Et zugeordnet sind. Jeder der Zeitreihen der Eingabe E ist einer von drei Eingangsknoten zugeordnet. In einem Vorwärtspfad des künstlichen neuronalen Netzwerks folgt auf die Eingangsschicht wenigstens eine verborgene Schicht. Eine Anzahl Knoten der wenigstens einer verborgenen Schicht ist im Beispiel größer, als eine Anzahl der Eingangsknoten. Diese Anzahl ist als Hyperparameter zu betrachten und wird vorzugsweise separat bestimmt. Im Beispiel sind in der verborgenen Schicht vier Knoten vorgesehen. Das künstliche neuronale Netz NN wird beispielsweise durch das Verfahren gemäß dem Gradientenabstieg in Form von Backpropagation gelernt. Das Training der wenigstens einen Funktion 104a-z erfolgt also überwacht.

Im Vorwärtspfad ist im Beispiel nach der wenigstens einen verborgenen Schicht eine Ausgangsschicht 612 vorgesehen. An der Ausgangsschicht 612 werden Vorhersage-Werte ausgegeben. Im Beispiel ist jedem Vorhersage-Wert ein Ausgangsknoten zugeordnet.

In jedem Zeitschritt i wird ein Tensor O'train bestimmt, in dem die Vorhersage-Werte für diesen Zeitschritt i enthalten sind. Dieser wird im Beispiel zusammen mit dem Spaltenvektor der beobachteten Werte Otrain einer Trainingseinrichtung 602 zugeführt. Die Trainingseinrichtung 602 ist im Beispiel ausgebildet, einen Vorhersage-Fehler mittels einer Loss-Funktion LOSS, insbesondere mittels eines Mean Square Errors, zu bestimmen, und das Modell M damit und mittels eines Optimierers, insbesondere eines Adam Optimierers, zu trainieren. Die Loss-Funktion LOSS wird im Beispiel abhängig von einer Abweichung, insbesondere dem Mean Square Error aus den Werten des Tensors der beobachteten Werte Otrain und dem Tensor der Vorhersage-Werte O'train bestimmt.

Das Training wird abgebrochen, sobald ein festgesetztes Kriterium erreicht ist. Im Beispiel wird das Training abgebrochen, wenn der Loss über mehrere Zeitschritte hinweg nicht mehr sinkt, d.h. insbesondere der Mean Square Error nicht geringer wird. Die gelernten Parameter der Funktion 104a, 104z werden in einem Datenspeicher 620 abgelegt.

Anschließend werden Testdaten in die so trainierte Funktion 104 eingegeben. Die Funktion 104 wird durch das Training mit den Trainingsdaten generiert. Die Funktion 104 wird mit den Testdaten insbesondere hinsichtlich Mittelwert µ und Kovarianz Σ ausgewertet.

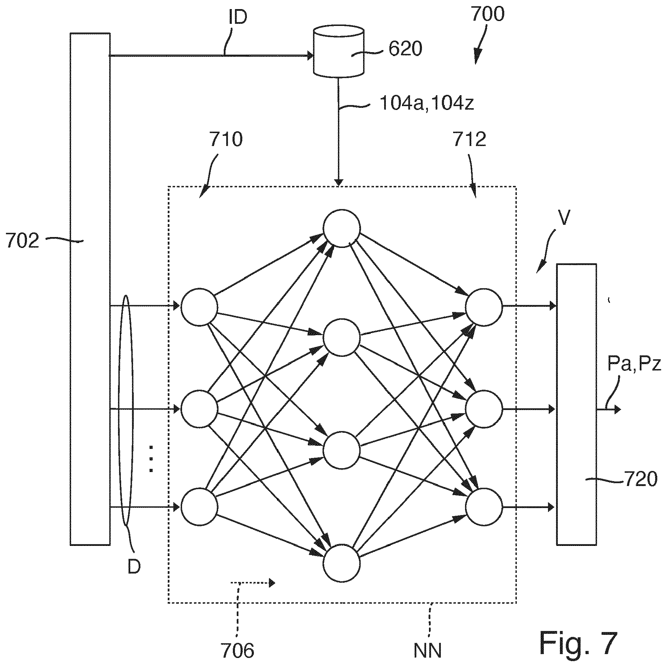

Figur 7 zeigt eine Vorrichtung 700 zur Ermittlung der Bewertung Pa, Pz, welche die Bewertung des aktuellen Zustands der Komponente charakterisieren. Eine Eingangsschnittstelle 702 dient zum Empfangen der zugeordneten Betriebsdaten.

Die maschinen-gelernte Funktion 104a, 104z wird zur Ermittlung der Bewertung Pa, Pz verwendet, welche beispielsweise eine mit dem Betrieb des Prozessventils assoziierte Anomalie oder einen fehlerfreien Normalbetrieb indiziert. Die Bewertung Pa, Pz wird in Abhängigkeit von den empfangenen Betriebsdaten D ermittelt.

Es erfolgt ein Propagieren 706 der Betriebsdaten D der durch die gelernte Funktion 104a, 104z in Form eines künstlichen neuronalen Netzes. Die Betriebsdaten D werden hierzu in einem Eingabebereich 710 der gelernten Funktion 104a, 104z bereitgestellt, wobei in einem Ausgabebereich 712 der Funktion 104a, 104z eine Vorhersage V bereitgestellt wird. Ein Klassifizierer 720 ermittelt wenigstens eine Bewertung Pa, Pz in Abhängigkeit von der Vorhersage V.

Eine Kennung ID wird gemeinsam mit den Betriebsdaten D übermittelt, wobei die Funktion 104a, 104z über die bzw. mittels der Kennung ID aus einer Mehrzahl von in dem Datenspeicher 620 hinterlegten Funktionen ausgewählt wird. Die trainierte Funktion 104a, 104z wird verwendet, um für die bereitgestellten Betriebsdaten die Vorhersagen V für die Klassifikation bereitzustellen. Dazu werden dieselben Datenvorverarbeitungsschritte wie bei den Trainingsdaten durchgeführt. Beispielsweise erfolgt eine Skalierung und eine Bestimmung von Ein- und Ausgabedaten. Diese Bestimmung erfolgt im Beispiel während des Betriebs des Prozessventils.

Wie für das Training beschrieben, wird für einen Zeitschritt i ein Spaltenvektor der Eingabe E in Form der bereitgestellten Betriebsdaten an die Eingangsschicht 710 übergeben. Danach werden im Unterschied zum Training von der Klassifizierungseinrichtung bzw. dem Klassifizier 720 abhängig von den Vorhersage-Werten V eine Klassifikation der zugeführten Betriebsdaten D durchgeführt.

Ein Klassifikationsscore für die Klassifikation des Betriebs der Prozessventil-Einheit wird zur weiteren Verarbeitung bereitgestellt. Der Klassifikationsscore für die Klassifikation des Prozessventils indiziert beispielsweise eine Anomalie, wenn dieser einen Schwellwert überschreitet und anderenfalls, dass ein Normalbetrieb vorliegt. Der Schwellwert ist vorzugsweise ein Parameter. Der Parameter wird beispielsweise mittels Maximierung eines Kriteriums, beispielsweise von Precision, Recall bestimmt. Beispielsweise wird ein Area under the Curve, AUC, oder Receiver Operating Characteristic, ROC, Kriterium benutzt.

Zur Durchführung der beschriebenen Verfahren sind insbesondere Instruktionen eines Computerprogramms vorgesehen, die die beschriebene Funktion 104a, 104z implementieren.

Das Ermitteln 404a-z, mittels wenigstens einer der trainierten Bewertungsfunktionen 104a-z, einer der Bewertungen Pa, Pz aus einer der anderen Figuren als der Figur 7 umfasst: Bereitstellen, mittels einer Input-Einheit 702, von Eingangsdaten für ein trainiertes tiefes künstliches neuronales Netz NN in Abhängigkeit von den Betriebsdaten D oder umfassend die Betriebsdaten D; Propagieren 706 der Eingangsdaten durch das trainierte tiefe neuronale Netz NN, wobei die Eingangsdaten als ein Eingabeparameter in einem Eingabeabschnitt des trainierten tiefen neuronalen Netzes NN bereitgestellt werden und wobei in einem Ausgabeabschnitt des trainierten tiefen neuronalen Netzes NN Vorhersagen V ausgegeben werden, welche die wenigstens eine Bewertung Pa, Pz repräsentieren.

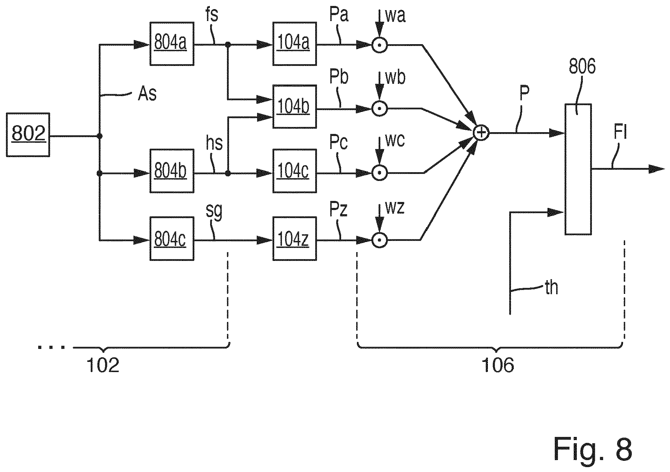

Figur 8 zeigt ein Beispiel zur Ermittlung des Diagnoseergebnisses in Form des Ferndiagnoseindikators FI. Die Bereitstellungseinheit 102 umfasst drei Ermittlungseinheiten 804a-c, welche ein gemeinsames Eingabesignal von einer Einheit 802 erhalten.

Die Einheit 802 ist beispielsweise eine Audioeinheit, welche mittels eines Mikrofons ein Audiosignal AS aufnimmt, welches zeitlich einen Schließ- oder Öffnungsvorgang des Prozessventils überstreicht. Selbstverständlich können alternativ oder zusätzlich andere Betriebsdaten verwendet werden.

Die Ermittlungseinheit 804a erzeugt ein Frequenzspektrum fs oder eine Fouriertransformierte in Abhängigkeit von dem Audiosignal AS.

Die Ermittlungseinheit 804b erzeugt ein Hilbertspektrum hs oder eine Hilberttransformierte in Abhängigkeit von dem Audiosignal AS.

Die Ermittlungseinheit 804c erzeugt ein Spektrogramm sg, welches eine bildliche Darstellung des Verlaufs des

Frequenzspektrums über der Zeit umfasst, in Abhängigkeit von dem Audiosignal AS.

Die Bewertungsfunktion 104a umfasst ein tiefes neuronales Netz und ermittelt eine Bewertung Pa in Abhängigkeit von dem Frequenzspektrum fs.

Die Bewertungsfunktion 104b umfasst ein tiefes neuronales Netz und ermittelt eine Bewertung Pb in Abhängigkeit von dem Frequenzspektrum fs und in Abhängigkeit von dem Hilbertspektrum hs.

Die Bewertungsfunktion 104c umfasst ein tiefes neuronales Netz und ermittelt eine Bewertung Pc in Abhängigkeit von dem Hilbertspektrum hs.

Die Bewertungsfunktion 104d umfasst ein tiefes neuronales Convolutional Network und ermittelt eine Bewertung Pz in Abhängigkeit von dem Spektrogramm sg.

Jede der Bewertungen Pa-z wird durch eine Multiplikation mit einem jeweiligen Gewichtungsfaktor wa-wz gewichtet und anschießend zu der Bewertung P addiert.

In einem Block 806 wird die Bewertung P mit einem Schwellwert th verglichen und der Ferndiagnoseindikator FI erzeugt, wenn die Bewertung nicht wenigstens den Schwellwert th erreicht, also kleiner ist als der Schwellwert th. Der Schwellwert th liegt beispielhaft bei 0, 95.

## Patentansprüche

1. Ein Verfahren umfassend:
Ermitteln oder Bereitstellen (402), insbesondere mittels einer Bereitstellungseinheit (102), von Betriebsdaten (D), welche sich auf einen derzeitigen Zustand einer Komponente einer Industrieanlage beziehen;
Ermitteln (404a-z), insbesondere mittels voneinander unterschiedlicher Bewertungsfunktionen (104a-z), einer Mehrzahl von Bewertungen (Pa, Pz), welche einen derzeitigen Zustand der Komponente charakterisieren, in Abhängigkeit von den Betriebsdaten (D); und
Ermitteln (406), insbesondere mittels einer Konsensfunktion (106), eines Diagnoseergebnisses in Abhängigkeit von der Mehrzahl von Bewertungen (Pa, Pz) .

2. Das Verfahren gemäß dem Anspruch 1, wobei das wenigstens eine Diagnoseergebnis einen Ferndiagnoseindikator (FI), welcher eine erweiterte Diagnose unter Zuhilfenahme einer entfernt von der Komponente angeordneten Vorrichtung (500) indiziert, umfasst, und wobei das Verfahren umfasst:
Versenden (408), mittels wenigstens einer Kommunikationseinheit (108), von Ferndiagnosedaten (F) in Richtung der entfernt von der Komponente angeordneten Vorrichtung (500), wenn der Ferndiagnoseindikator (FI) ermittelt wurde.

3. Das Verfahren gemäß einem der vorigen Ansprüche umfassend:
Empfangen (410), mittels der wenigstens einen Kommunikationseinheit (108), einer Bewertung (Q), welche den derzeitigen Zustand der Komponente charakterisiert, als Antwort auf den Versand der Ferndiagnosedaten (F).

4. Das Verfahren gemäß dem Anspruch 2 oder 3 umfassend:
Bereitstellen (420), mittels wenigstens einer Benutzerschnittstelle (110), des Ferndiagnoseindikators (FI);
Ermitteln (422), mittels der wenigstens einen Benutzerschnittstelle (110), eines Freigabebefehls (AC); und
wobei das Versenden (408) der Ferndiagnosedaten (F) nur dann erfolgt, wenn der Freigabebefehl (AC) vorliegt.

5. Das Verfahren gemäß einem der vorigen Ansprüche, wobei das wenigstens eine ermittelte Diagnoseergebnis eine aggregierte Bewertung (P), welche den derzeitigen Zustand der Komponente charakterisiert, umfasst, wobei das Verfahren umfasst: Bereitstellen (430), mittels der wenigstens einen Benutzerschnittstelle (110), der aggregierten Bewertung (P).

6. Das Verfahren gemäß einem der vorigen Ansprüche, wobei wenigstens eine der Bewertungsfunktionen (104a-z) maschinentrainiert ist.

7. Das Verfahren gemäß dem Anspruch 6, wobei das Ermitteln (404a-z), mittels wenigstens einer der trainierten Bewertungsfunktionen (104a-z), einer der Bewertungen (Pa, Pz) umfasst:
Bereitstellen, mittels einer Input-Einheit (702), von Eingangsdaten für ein trainiertes tiefes neuronales Netz (NN) in Abhängigkeit von den Betriebsdaten (D) oder umfassend die Betriebsdaten (D);
Propagieren (706) der Eingangsdaten durch das trainierte tiefe neuronale Netz (NN), wobei die Eingangsdaten als ein Eingabeparameter in einem Eingabeabschnitt des trainierten tiefen neuronalen Netzes (NN) bereitgestellt werden und wobei in einem Ausgabeabschnitt des trainierten tiefen neuronalen Netzes (NN) Vorhersagen (V) ausgegeben werden, welche die wenigstens eine Bewertung (Pa, Pz) repräsentieren.

8. Das Verfahren gemäß einem der vorigen Ansprüche, wobei die wenigstens eine Bewertungsfunktion (104a-z) eine Abbildungsfunktion, welche wenigstens einen mit dem Betrieb der Komponente assoziierten Parameter, insbesondere eine Zyklusanzahl, eine Stromkennlinie eines Antriebs, eine Nutzungsart, auf die jeweilige Bewertung (Pa, Pz) abbildet, umfasst.

9. Das Verfahren gemäß einem der vorigen Ansprüche, wobei die Ferndiagnosedaten (F) wenigstens zu einem Teil die bei der Ermittlung der Mehrzahl von Bewertungen (Pa-z) verwendeten Betriebsdaten (D) umfassen.

10. Das Verfahren gemäß einem der vorigen Ansprüche, wobei das Verfahren umfasst:
Ermitteln oder Bereitstellen, insbesondere mittels einer Bereitstellungseinheit (403), von weiteren Daten (Dx), welche sich auf den derzeitigen Zustand einer Komponente einer Industrieanlage beziehen, und welche sich von den verwendeten Betriebsdaten unterscheiden, insbesondere eine höhere Genauigkeit im Vergleich mit den verwendeten Betriebsdaten (D) aufweisen; und
wobei die Ferndiagnosedaten (F) wenigstens zu einem Teil die weiteren Daten (Dx) umfasst, welche nicht bei der Ermittlung der Mehrzahl von Bewertungen (Paz) verwendet wurden.

11. Das Verfahren gemäß einem der vorigen Ansprüche, wobei die Komponente der Industrieanlage ein Prozessventil (200) ist, und wobei zumindest ein Teil der Betriebsdaten (D) oder der weiteren Daten (Dx) während einer Zeitdauer umfassend wenigstens einen oder maximal einen Öffnungsvorgang des Prozessventils (200) oder wenigstens einen oder maximal einen Schließvorgang des Prozessventils (200) aufgenommen wurden.

12. Eine Vorrichtung (100), insbesondere umfassend ein mobiles Endgerät (300) und/oder eine mit der Komponente der Industrieanlage assoziierte Einheit, umfassend:
eine Bereitstellungseinheit (102) zum Ermitteln oder Bereitstellen (402) von Betriebsdaten (D), welche sich auf einen derzeitigen Zustand einer Komponente einer Industrieanlage beziehen;
voneinander unterschiedliche Bewertungsfunktionen (104a-z) zum Ermitteln (404a-z) einer Mehrzahl von Bewertungen (Pa, Pz), welche einen derzeitigen Zustand der Komponente charakterisieren, in Abhängigkeit von den Betriebsdaten (D); und
eine Konsensfunktion (106) zum Ermitteln (406) eines Diagnoseergebnisses in Abhängigkeit von der Mehrzahl von Bewertungen (Pa, Pz).

13. Ein Verfahren umfassend:
Empfangen, mittels einer Kommunikationseinheit (508) von Ferndiagnosedaten (F), welche einen derzeitigen Zustand einer Komponente einer Industrieanlage charakterisieren;
Ermitteln, mittels unterschiedlicher insbesondere maschinentrainierter Bewertungsfunktionen (504a-z), einer Mehrzahl von Bewertungen (Qa-z), welche den derzeitigen Zustand der Komponente charakterisieren, in Abhängigkeit von den empfangenen Ferndiagnosedaten (F) ;
Ermitteln, mittels einer Konsensfunktion (506), wenigstens einer aggregierten Bewertung (Q), welche den derzeitigen Zustand der Komponente charakterisiert, in Abhängigkeit von der Mehrzahl von Bewertungen (Qa, Qz); und
Versenden, mittels der Kommunikationseinheit (508) der aggregierten Bewertung (Q).

14. Eine Vorrichtung (500), insbesondere ein Cloud-Service und/oder eine zentrale Berechnungseinheit, welche entfernt von einer Komponente einer Industrieanlage angeordnet ist, umfassend:
eine Kommunikationseinheit (508) zum Empfangen von Ferndiagnosedaten (F), welche einen derzeitigen Zustand einer Komponente einer Industrieanlage charakterisieren;
unterschiedliche maschinentrainierte Bewertungsfunktionen (504a-z) zum Ermitteln einer Mehrzahl von Bewertungen (Qa-z), welche den derzeitigen Zustand der Komponente charakterisieren, in Abhängigkeit von den empfangenen Ferndiagnosedaten (F) ;
eine Konsensfunktion (506) zum Ermitteln wenigstens einer aggregierten Bewertung (Q), welche den derzeitigen Zustand der Komponente charakterisiert, in Abhängigkeit von der Mehrzahl von Bewertungen (Qa, Qz); und
die Kommunikationseinheit (508) zum Versenden der aggregierten Bewertung (Q).
